# EUROPÄISCHE PATENTSCHRIFT

(11) **EP 3 198 082 B1**
(45) Veröffentlichungstag und Bekanntmachung des Hinweises auf die Patenterteilung: **12.05.2021**
(21) Anmeldenummer: 15766485.5
(22) Anmeldetag: 18.09.2015
(51) Int. Cl.: E02B 3/02

(54) **VERFAHREN ZUR KÜNSTLICHEN EROSION VON STAUGEWÄSSERN**
METHOD FOR ARTIFICIALLY ERODING DAMMED BODIES OF WATER
PROCÉDÉ D'ÉROSION ARTIFICIELLE DE BASSINS DE RETENUE

(30) Priorität: 25.09.2014 DE 102014014009
(43) Veröffentlichungstag der Anmeldung: 02.08.2017
(73) Patentinhaber: Bartelt, Dietrich, 47228 Duisburg (DE)
(72) Erfinder: Bartelt, Dietrich, 47228 Duisburg (DE)
(74) Vertreter: Geskes, Christoph
(86) Internationale Anmeldenummer: PCT/EP2015/071493
(87) Internationale Veröffentlichungsnummer: WO 2016/046090

(56) Entgegenhaltungen:
- WO-A1-2008/122377
- DE-A1- 2 937 612
- JP-A- H11 324 008

## Beschreibung

Die Erfindung betrifft ein Verfahren zur künstlichen Erosion von Staugewässern, wie beispielsweise Stauseen, Laufstaue oder aufgestaute natürliche Seen und andere erheblich veränderte Wasserkörper.

Fluvial, also von Flüssen transportierte Sedimente wie beispielsweise Lösungsfracht, Schweb- bzw. Suspensionsfracht und Geröll bzw. Feststofffracht sind für Flüsse ökologisch bedeutsam. Insbesondere wird die Feststofffracht entweder saltierend oder rollend-schiebend von dem Fluss transportiert. Weiterhin sind Schwebstoffe im Fluss vorhanden, die weitgehend frei in der Wassersäule schweben. In unverbauten Flüssen stehen Sedimentationsprozesse, d. h. die Ablagerung der fluvial transportieren Sedimente, und Erosionsprozesse, d. h. die Abtragung der Sedimente, zumeist im Gleichgewicht. Wird ein Gewässer aufgestaut, ändert sich über weite Bereiche der Fließquerschnitt des Flusses. Durch diese Querschnittsänderung kommt es zu einer Verlangsamung der Fließgeschwindigkeit, wobei die Sedimente abgelagert und nicht weiter transportiert werden. In dieser Folge setzt sich in Staugewässern vermehrt Sediment ab. Gleiches gilt auch für Staubecken, beispielsweise von Wasserkraftwerken, wo zwischen den einzelnen Betriebsvorgängen, d. h. dem Pump- und dem Turbinenbetrieb, das Wasser in einer relativen Ruhe verharrt. Zum einen verringert das zunehmende Sediment am Staugewässerboden die Kapazität des Stauwassers und zum anderen fehlt dem Unterwasser, d. h. dem Gewässer, das sich unterhalb der Stauanlage befindet, das fluviale Sediment.

Das fluviale Sediment wird von Flüssen benötigt, um Sedimentationsprozesse an anderer Stelle auszugleichen. Dies hat insbesondere Auswirkungen auf den Hochwasserschutz, da entsedimentierte Flüsse schneller Wasser transportieren und somit Hochwasserwellen schneller fortbewegt werden und auch größere Amplituden aufweisen. Auch z. B. an den Füßen eines Dammes oder einer Staumauer kommt es oft zu starken Erosionen, die die Stabilität des Dammes sicherheitskritisch beeinträchtigen können. In den Flüssen werden neben Wasser auch Feststoffe, Lebewesen, Gase, beispielsweise Kohlendioxid, Sauerstoff, Methan oder sonstige Fäulnisgase, und Energie, insbesondere in Form von Fließgeschwindigkeit und Temperatur, transportiert. Wird der Transport durch Aufstauungen verhindert oder stark beeinträchtigt, kommt es auch zu ökologischen Folgen flussabwärts der Stauanlage. Nährstoffe sind oft weniger im Wasser enthalten, wenn Schwebstoffe sich im Staugewässer abgesetzt haben. Weiterhin kann die Zurückhaltung von Feststofffracht wie Steine, Sand und Kies die Fließgeschwindigkeit im Unterwasser vergrößern. Die Energie, die ansonsten für den Transport des fluvialen Sediments aufgebracht werden musste, geht nun vollständig in die Fließgeschwindigkeit des Wassers ein. Die so erhöhte Fließgeschwindigkeit hat größere erodierende Kräfte auf das Flussbett, wodurch es zu einer weiteren Vergrößerung der Fließgeschwindigkeit und beispielsweise Eingrabung des Flußbettes kommt.

Ein weiterer Nachteil an den Staugewässern ist, dass schon bei einer Sedimentdicke der sich absetzenden Sedimente von etwa 2 cm Abbauprozesse von organischem Material nur noch anaerob erfolgen können. Dies führt zu erhöhter Ausstoßung von Methan. In Anbetracht der großen Anzahl von Staustufen, die in den einzelnen, insbesondere beschifften, aber auch zur Erzeugung von Energie aus Wasserkraft verwendeten Staugewässern vorhanden sind, ist die Ausgasung von Methan aus Staugewässern immens.

Aus dem Stand der Technik sind einige Verfahren bekannt, die eine Verfrachtung von Sedimentablagerungen in Staugewässern vorsehen. So beschreibt die EP 2 134 902 B1 ein Verfahren zur Verfrachtung von Sedimenten in Wasserkraftanlagen, wobei die Sedimentablagerungen im Sedimentbereich des Staubeckens aufgenommen werden und die aufgenommenen Sedimentablagerungen in einen Erosionsbereich des Staubeckens in der Nähe der Abflussorgane verfrachtet werden.

DE 29 37 612 A1, welches als nächster Stand der Technik angesehen wird, offenbart ein Geschiebedepot mit einer Geschiebezuführung im Bett eines der Sohlenerosion unterworfenen Flusses, wobei ein Kies-Sand-Gemisch mit einer gleitenden Kornzusammensetzung wie das an der Sohle natürlich anstehende am Beginn der Erosionsstrecke auf die Flusssohle abgelagert wird.

Aufgabe der Erfindung ist es, den bekannten Stand der Technik zu verbessern.

Die Aufgabe wird erfindungsgemäß gelöst mittels des Verfahrens nach Anspruch 1. Weitere vorteilhafte Ausgestaltungen sind den Unteransprüchen sowie der nachfolgenden Beschreibung und den Figuren zu entnehmen. Die einzelnen Merkmale der beschriebenen Ausgestaltungen sind jedoch nicht auf diese beschränkt, sondern können untereinander und mit anderen Merkmalen zur weiteren Ausgestaltungen verknüpft werden, solange sie unter den Schutzumfang der Ansprüche fallen.

Es wird ein Verfahren zur künstlichen Erosion von Staugewässern vorgeschlagen, wobei eine Verteilung der mittleren Korngrößen von Sedimenten des Staugewässers über die Grundfläche des Staugewässers ermittelt wird. Das Unterwasser und/oder das Staugewässer und/oder zumindest ein in das Staugewässer mündendes Gewässer wird limnologisch überwacht, wobei die limnologischen Daten dazu verwendet werden, einen Sedimentbedarf des Unterwassers zu ermitteln, und es erfolgt entsprechend dem Sedimentbedarf des Unterwassers zumindest eine Verlagerung der Sedimente des Staugewässers in das Unterwasser. Vorteilhafterweise werden zumindest ein Bedarf an Menge und Korngröße des Sediments für das Unterwasser ermittelt.

Die künstliche Erosion erfolgt vorteilhafterweise durch eine maschinelle Aufnahme der Sedimente. Vorteilhaft an dem vorgeschlagenen Verfahren ist, dass durch die Ermittlung des Sedimentbedarfes des Unterwassers und der Einbringung des entsprechenden Sedimentes aus dem Staugewässer in das Unterwasser es möglich ist, ökologisch optimale Sedimentbedingungen in dem Unterwasser nachzubilden.

Ein weiterer Vorteil an dem beschriebenen Verfahren ist, dass zu bestimmten Ereignissen oder zu bestimmten Zeiten, beispielsweise für den Hochwasserschutz, ein erhöhter Sedimenteintrag in das Unterwasser erfolgen kann, um beispielsweise die Flussenergie eines Unterwassers abzumildern und somit Amplitude und/oder Fließgeschwindigkeit zu regeln oder steuern.

Das oder die in das Staugewässer mündenden Flüsse bzw. Gewässer tragen eine große Menge Sediment in das Staugewässer mit einer weiten Streuung an Korngrößen. Das Fließgewässer wird beim Annähern an die Stauanlage abgebremst, so dass nach und nach Sediment, welches transportiert wurde, ausfällt. So ist eine Sedimentverteilung in Staugewässern zu beobachten, wobei Geröll und Kies zuerst ausfallen und somit von der Stauanlage entfernter sich ansammeln als Sand und an der Stauanlage selber meist nur Schluff und Ton aufzufinden ist. Somit ergibt sich eine Verteilung der mittleren Korngröße des Sediments in dem Staugewässer von Feinstsediment, das eine mittlere Korngröße unter etwa 0,2 mm, vorzugsweise Feinsand mit einer mittleren Korngröße unter etwa 0,2 mm und Schluff und Ton mit einer mittleren Korngröße unter etwa 0,063 mm aufweist, über Mittelsand und Großsand mit einer mittleren Korngröße von etwa 0,2 mm und mehr bis hin zu Kies mit einer mittleren Korngröße von mehr als etwa 2 mm, insbesondere bis etwa 63 mm. Weiterhin gehören zum Feinstsediment auch Kleinstpartikel mit einer mittleren Korngröße unter 0,01 mm. Hierzu zählen insbesondere auch Nanopartikeln und/oder Anlagerungen von Nanopartikeln, insbesondere mit einer mittleren Korngröße von 1 nm bis 300 nm bzw. 1 nm bis 100 nm.

Auch größeres Geröll und Blöcke gehören zu den Sedimenten, wobei dies insbesondere schon sehr früh ausfällt und nicht weiter bewegt wird, wenn das Fließgewässer in das Staugewässer eintritt. Die Ermittlung der Korngrößenverteilung kann rechnerisch oder über Abschätzung, insbesondere unter Zuhilfenahme der gemessenen oder errechneten Fließgeschwindigkeit erfolgen. In einer weiteren Ausgestaltung ist vorgesehen, dass die Ermittlung der Verteilung der mittleren Korngröße der Sedimente im Staugewässer mittels Probennahme oder Sichtung erfolgt.

Wird im Rahmen dieser Erfindung die Fließgeschwindigkeit erwähnt, so ist die tatsächlich gemessene oder die errechnete Fließgeschwindigkeit darunter zu verstehen. Insbesondere kann die Fließgeschwindigkeit auf Grundlage von errechnetem oder gemessenem Wasserstand, errechnetem oder gemessenem Niederschlag, errechneter oder gemessener Lufttemperatur, errechnetem oder gemessenem Luftdruck, errechneter oder gemessener Luftfeuchte, errechneter oder gemessener Windgeschwindigkeit, errechneter oder gemessener Verdunstung oder errechneten oder gemessenen sonstigen Daten, auch jegliche Kombination dieser miteinander, ermittelt werden.

Vorzugsweise wird zur Bestimmung des Sediments eine Fingerprobe nach DIN 19682-2 für Sande, Lehm, Schluffe und Tone und/oder eine Trockensiebung nach DIN 66165-2 für Sande, Kies und Geröll vorgenommen.

Gemäß einer Ausgestaltung des Verfahrens ist vorgesehen, dass eine Abtragung der Sedimente des Staugewässers erfolgt, die etwa eine mittlere Korngröße aufweisen, die dem Sedimentbedarf des Unterwassers entsprechen. Das heißt, die Abtragung und/oder Aufnahme erfolgt insbesondere dort, wo Sedimente erwartet werden oder durch Messungen bekannt sind, die entsprechende Korngrößen oder Korngrößenverteilungen aufweisen, wie sie im Unterwasser benötigt sind. Sollten größere Streuungen der Korngröße im Unterwasser benötigt werden, so ist in einer Ausgestaltung vorgesehen, dass die Abtragung und/oder Aufnahme in mehreren Bereichen des Staugewässers erfolgt. Weiterhin vorteilhaft werden unterschiedliche Bereiche des Staugewässers angefahren, an denen unterschiedliche mittlere Korngrößen erwartet werden, um den Bedarf des Unterwassers an Sediment zu decken. Insbesondere ist vorgesehen, dass nach und nach, ggf. kontinuierlich, Sediment unterschiedlicher mittlerer Korngrößen in das Unterwasser eingebracht wird, um somit über einen längeren Zeitraum im Mittel den Sedimentbedarf des Unterwassers zu decken. Der längere Zeitraum ist insbesondere etwa ein Tag bis etwa ein Jahr, weiter bevorzugt etwa ein Tag bis etwa eine Woche, weiter bevorzugt etwa eine Woche bis etwa ein Monat, weiter bevorzugt etwa ein Monat bis etwa ein Jahr.

Unter einem Sedimentbedarf des Unterwassers wird insbesondere ein punktueller Sedimentbedarf verstanden. Dieser kann an einer beliebigen Stelle im Unterwasser ermittelt werden, z.B. im Rahmen einer limnologischen Überwachung. Diese umfasst beispielsweise eine Fingerprobe nach DIN 19682-2 und/oder eine Trockensiebung nach DIN 66165-2. Besonders bevorzugt wird für die Ermittlung eine Stelle gewählt, an der für das Unterwasser typische Strömungsverhältnisse und Fließgeschwindigkeiten herrschen. Eine derartige Stelle ist im Allgemeinen von der Stauanlage beabstandet. Weiterhin wird unter einem Sedimentbedarf des Unterwassers insbesondere auch ein gemittelter bzw. interpolierter Sedimentbedarf verstanden. Dieser kann z.B. auf an mehreren Stellen des Unterwassers punktuell ermittelten Parametern bzw. Proben basieren.

Ein besonders wichtiger Parameter ist die Fließgeschwindigkeit. Ist diese im Unterwasser besonders stark, so fehlen im Unterwasser auch größere Korngrößen. Bei niedrigen Fließgeschwindigkeiten sind Sedimente mit größerem Durchmesser auch noch im Unterwasser vorhanden. Dann fehlen vermehrt Sedimente mit kleinen und mittleren Korngrößen. Da die Fließgeschwindigkeit und andere Parameter des Unterwassers weitestgehend von denen des Staugewässers entkoppelt ist, ist es nicht zwangsläufig so, dass die aufgestauten bzw. "überschüssigen" Sedimente im Staugewässer auch in dieser Menge im Unterwasser fehlen. Auch werden nicht zwangsläufig Sedimente jeder Korngröße benötigt. Daher umfasst das erfindungsgemäße Verfahren eine von der Ermittlung einer Verteilung der mittleren Korngröße von Sedimenten des Staugewässers gesonderte Ermittlung eines Sedimentbedarfs des Unterwassers.

Erfindungsgemäß ist vorgesehen, dass das Unterwasser und/oder das Staugewässer und/oder zumindest ein in das Staugewässer mündendes Gewässer limnologisch überwacht wird. Die limnologische Überwachung schließt Seen als auch Fließgewässer von der Quelle bis zur Mündung in einen Fluss oder ein Meer oder einen See beziehungsweise zum Flussdelta ein. Weiterhin bevorzugt schließt die limnologische Überwachung eine hydrologische Überwachung, eine bathymetrische Überwachung, eine Überwachung des Benthos und/oder eine ökologische Überwachung ein. Insbesondere wird die Fließgeschwindigkeit, die Trübung, Nährstoffe im Wasser, Erosion und/oder Sedimentierung bestimmter kennzeichnender Bereiche, im bewegten Wasser mitgeführte Feststoffe, im Wasser gelöste Gase, der Wasserstand, die Temperatur des Wassers an kennzeichnenden Stellen sowie Lebewesen und/oder weitere limnologisch relevante Daten überwacht. Weiterhin ist gemäß einer Ausgestaltung vorgesehen, dass eine hydrologische Überwachung zumindest eines Teiles des Gewässers, das heißt des Unterwassers, des Staugewässers und/oder zumindest eines in das Staugewässer mündendes Gewässers vorgenommen wird. In einer weiteren Ausführungsform ist eine hydrometrische Überwachung vorgesehen. Weiterhin kann in die Überwachung ein Ventilstand eines Ablaufes bzw. der tatsächliche und/oder geplante Ausflussmenge aus der Stauanlage insbesondere durch einen Unterabfluss, einen Hochwasserschutzabfluss, einen Trinkwasserentnahmeabfluss und/oder einen Turbinenabfluss ermittelt und vorzugsweise in die Berechnung des Sedimentbedarfs mit einfließen. Das Ermitteln der limnologischen Daten und ggf. auch anderer Daten, wie beispielsweise Wetter, wird erfindungsgemäß dazu verwendet, den Sedimentbedarf des Unterwassers zu ermitteln. Die Ermittlung der limnologischen Daten des Staugewässers wird insbesondere zur Überwachung des Staugewässers in ökologischer und/oder trinkwassertechnischer Hinsicht verwendet. Beispielsweise kann die künstliche Erosion gestoppt oder temporär unterbrochen werden, falls durch die Abtragung und/oder Aufnahme des Sediments im Staugewässer ein zu hoher Eintrag von Methan in das Staugewässer erfolgt.

Besonders bevorzugt ist vorgesehen, dass der Sedimentbedarf des Unterwassers mittels Messdaten aus der limnologischen Überwachung bestimmt wird.

Weiterhin vorteilhaft ist in einer Ausführungsform vorgesehen, dass die Verlagerung der Sedimente über einen Regelkreis gesteuert wird. Die Verlagerung der Sedimente, insbesondere der im Abtragungsort im Staugewässer oder Eintragungsort im Unterwasser sowie der Abtragungsgeschwindigkeit und andere für die Abtragung und/oder Aufnahme relevanten Eigenschaften werden von den gewonnenen Messdaten aus einer Überwachung des Unterwassers und ggf. des Staugewässers geregelt.

In einer weiteren Ausgestaltung ist vorgesehen, dass die Verlagerung der Sedimente gesteuert wird. Beispielsweise wird die Verlagerung der Sedimente in Abhängigkeit von Öffnungsständen, wie beispielsweise einer Bypassöffnung, einer Hochwasserschutzöffnung, einer Unterablauföffnung und/oder einer Turbinen- bzw. Trinkwasserentnahmeöffnung gesteuert. Mit dem Wissen, welcher Eintrag in das Unterwasser bei welcher Öffnung der Stauanlagen erfolgt, kann der Sedimentbedarf abgeschätzt bzw. errechnet werden und die entsprechende Menge und die entsprechende Korngrößenverteilung der Sedimente in das Unterwasser eingetragen werden.

In einer weiteren Ausgestaltung des Verfahrens ist vorgesehen, dass die Abtragung und/oder Aufnahme zumindest mittels eines Nassbaggers, eines Spülverfahrens und/oder mittels eines Injektionsverfahrens erfolgt. Insbesondere ist in einer Ausgestaltung vorgesehen, dass zumindest ein Saugbagger wie beispielsweise Hopperbagger oder Cutterbagger eingesetzt werden. In einer weiteren Ausgestaltung ist vorgesehen, dass Luft oder Wasser in die Sedimente injiziert werden, um insbesondere Schwebeteilchen, bzw. Feinstsedimente in einer Korngröße von < 0,2 mm zu lösen und mittels einer Saugvorrichtung abzutransportieren oder durch die im Staugewässer vorhandene Strömung abtransportieren zu lassen.

Insbesondere in dem Fall, wo große Sedimentablagerungen bereits im Staugewässer bestehen, kann es notwendig sein, Zwischendepots vorzusehen, um überschüssiges Sediment zumindest zwischenzulagern. So ist in einer Ausgestaltung vorgesehen, dass Sedimente des Staugewässers aufgenommen und in mindestens einem Zwischendepot gelagert werden. Das oder die Zwischendepots können ausgestaltet sein als große Becken oder natürlich vorkommende Senken, in denen das Sediment zumindest temporär eingebracht wird. Vorzugsweise wird das zwischengelagerte Sediment zu einem späteren Zeitpunkt zusätzlich oder alleinig dem Unterwasser zugeführt. In einer weiteren Ausgestaltung ist vorgesehen, dass überschüssiges Sediment, das nicht in das Unterwasser eingetragen werden soll, in Spülfeldern untergebracht wird.

In einer weiteren Ausgestaltung ist vorgesehen, dass die Sedimente vor einer Einlagerung in das Zwischendepot klassiert werden. Insbesondere wird das Sediment nach der Korngröße, vorzugsweise nach der mittleren Korngröße, insbesondere mittels Sieben, klassiert. In einer weiteren Ausgestaltung wird eine Klassierung nach dem Ort der Aufnahme im Staugewässer oder eine hydraulische Klassierung vorgenommen. Die Klassierung vor der Einlagerung in das Zwischendepot vereinfacht die Auswahl der mittleren Korngröße aus dem Zwischendepot, wenn, wie in einer weiteren Ausgestaltung vorgesehen ist, entsprechend des Sedimentbedarfs des Unterwassers eine Verlagerung der Sedimente des Zwischendepots in das Unterwasser erfolgt.

In einer weiteren Ausgestaltung ist vorgesehen, dass die Sedimente vor, in oder hinter einem Ablauf des Staugewässers eingetragen werden. Insbesondere ist vorgesehen, dass die Eintragung in der Nähe eines Turbinenablaufs, eines Grundablaufs, eines Bypasses oder eines sonstigen Ablaufes in Staugewässer eingebracht wird. Der Begriff "in der Nähe" bezogen auf die Abflussorgane des betroffenen Staugewässers umfasst im Sinne der vorliegenden Erfindung nicht die direkte Einbringung von Sedimentablagerungen in die Abflussorgane oder eine Ablagerung der aufgenommenen Sedimente unmittelbar vor, d. h. unbeabstandet vor dem Abflussorgan. Vielmehr ist unter dem Begriff "in der Nähe" zu verstehen, dass die Sedimente auch in Abhängigkeit von der Größe des Abflussorgans in dessen Nähe eingebracht werden. So ist eine Verfrachtung der Sedimentablagerung bis max. etwa 1 m vor den Abflussorganen eines betroffenen Stauraumes vorteilhaft. Weiter bevorzugt erfolgt die Verfrachtung der Sedimente in einem Bereich von mindestens etwa 1,5 m, weiter bevorzugt mindestens etwa 2 m, noch weiter bevorzugt mindestens etwa 3 m vor dem Abflussorgan des betroffenen Staugewässers. Bei großen Gewässeranlagen wird der Abstand vorzugsweise mindestens etwa 8 m betragen, und bevorzugt in einem Bereich von etwa 1 m bis etwa 300 m, bevorzugt etwa 1 m bis etwa 100 m, weiter bevorzugt etwa 1 m bis etwa 50 m liegen. In einer weiteren Ausgestaltung ist vorgesehen, dass das Sediment unmittelbar vor dem Abflussorgan oder in das Abflussorgan eingebracht wird. Dies wird von dem betreffenden Staugewässer und dessen Funktion und Eignung hierzu abhängig gemacht. In einer weiteren vorteilhaften Ausgestaltung ist vorgesehen, dass das Sediment direkt in das Untergewässer eingebracht wird. Besonders bevorzugt ist vorgesehen, dass das Sediment in den Bereich des in das Unterwasser einströmenden Wassers eingebracht wird, das bedeutet, das Sediment wird z. B. über einen Staudamm oder um diesen herum in die Nähe oder unmittelbar in das aus dem Staugewässer in das Unterwasser einfließende Wasser oder in das Unterwasser selbst eingebracht. Weiterhin bevorzugt ist vorgesehen, dass das Sediment in Erosionsbereiche, d. h. in von Erosion betroffene Bereiche des Unterwassers eingebracht wird. Einige Dämme zeigen derzeit Erosionsschäden im Bereich ihrer Fundamente, die durch dieses Verfahren erfolgreich behoben oder abgemildert werden könnten.

In einer Ausführungsform, in der die Sedimente in erosionsgefährdete oder erosionsbetroffene Bereiche des Unterwassers eingetragen werden, ist beispielhaft vorgesehen, dass der Eintrag der Sedimente und die Korngrößenverteilung in etwa der beobachteten Erosion des entsprechenden Bereiches entsprechen.

Ist im Sinne der Erfindung von "Beobachtung" oder "Messung" oder "Ermittlung" die Rede, so ist insbesondere eine elektronische Überwachung oder eine optoelektronische Überwachung oder optoelektronische Messung oder eine sensorische Überwachung vorgesehen.

In einer weiteren Variante des Verfahrens ist vorgesehen, dass die Eintragungsstelle variiert wird. So kann zwischen einer Eintragung vor oder in der Stauanlage oder hinter der Stauanlage an verschiedenen Eintragungspunkten oder nacheinander das Sediment hin verfrachtet werden. In einer weiteren Ausgestaltung ist vorgesehen, dass zwei oder mehr Sedimentabtragungsstellen und Sedimenteintragungsstellen vorgesehen sind, die gleichzeitig angefahren werden. So ist gemäß einer Ausgestaltung vorgesehen, dass zwei, drei oder mehr Saugbagger bzw. Nassbagger oder kombiniert mit einem oder mehreren Nassbaggern Spül- oder Injektionsverfahren vorgesehen sind, um die Sedimente zu verfrachten.

In einer weiteren Variante des Verfahrens ist vorgesehen, dass die Verlagerung der Sedimente des Staugewässers in das Unterwasser mittels mindestens einer Förderanlage erfolgt. Hierbei kann insbesondere auch Wasser des Staugewässers und/oder darin enthaltene Stoffe und/oder Lebewesen als Fördermedium verlagert werden, insbesondere auch die vorgenannten Gase. Besonders bevorzugt wird eine Förderanlage verwendet, die mindestens einen Schneckenförderer umfasst. Dieser umfasst vorzugsweise zumindest eine Förderschnecke und einen Schneckentrog.

Vorteilhafterweise kann die Förderanlage zudem zur Gewinnung von elektrischer Energie verwendet werden. Hierfür kann die Förderanlage einen Generator umfassen. Der Wasserdruck bzw. die Schwerkraft kann beispielsweise zum Antrieb der Förderanlage und des Generators genutzt werden. Insbesondere bei einer einen Schneckenförderer umfassenden Förderanlage kann das Arbeitsprinzip der archimedischen Schraube zur Energiegewinnung umgekehrt werden. Diese Energie kann gespeichert werden. Ferner kann die Energie direkt für das zuvor beschriebenen Verfahren verwendet werden, z.B. zum Betrieb von einzusetzenden Sensoren. Hierdurch ist das erfindungsgemäße Verfahren energieeffizient bzw. selbstversorgend betreibbar. Die Förderanlage umfasst vorzugsweise einem Akkumulator und/oder Stromleitungen.

Die Förderanlage umfasst vorzugsweise ein Getriebe und/oder einen Motor bzw. einen Getriebemotor zur Steuerung bzw. Begrenzung der Fördergeschwindigkeit und Förderrichtung. Insbesondere ist auch eine Förderrichtung vom Unterwasser zum Staugewässer realisierbar.

Die Förderanlage ist vorzugsweise derart ausgebildet, dass das Fördermedium bei der Verlagerung nicht komprimiert wird und/oder nur geringe Scherkräfte angesetzt. Hierdurch wird verhindert, dass die Korngröße der verlagerten Sedimente ungewollt verringert wird. Ferner kann sichergestellt werden, dass eventuell im Fördermedium vorhandene Lebewesen wie Fische nicht zu schaden kommen. Beispielsweise kann eine Förderanlage verwendet werden, die mindestens eine Exzenterschneckenpumpe umfasst.

Weiterhin kann die Förderanlage als Wassertreppe verwendet werden. Mittels dieser können z.B. Fische und andere Lebewesen vom Unterwasser ins Staugewässer gelangen oder umgekehrt. Hierdurch wird vorteilhafterweise die Durchgängigkeit von Fließgewässern, insbesondere für Wanderfische, wiederhergestellt.

Die Förderanlage kann mehrere Schneckenförderer und/oder Exzenterschneckenpumpen umfassen, um eine Verlagerung eines Fördermediums, insbesondere Sedimente, über größere Höhen und/oder Gefälle zu realisieren.

Weiterhin kann die Förderanlage eine Saug-, Druck-, Spül- und/oder Injektionsvorrichtung zur Verlagerung des Fördermedium bzw. der Sedimente umfassen. Die Förderanlage kann insbesondere eine Pumpeneinheit umfassen. Diese kann als eine Saugpumpe und/oder Druckpumpe ausgebildet sein. Die Pumpeneinheit kann ferner als Strahlpumpe ausgebildet sein. Weiterhin kann die Pumpeneinheit als hydraulischer Widder ausgebildet sein.

Die Förderanlage kann eine Überwachungsvorrichtung umfassen. Diese kann zur limnologischen Überwachung verwendet werden. Die Überwachungsvorrichtung kann mobil ausgebildet sein. Diese kann mindestens eine Transportvorrichtung umfassen, z.B. ein Automobil, eine Boje, ein Boot, ein U-Boot, ein Schiff, ein Ballon, ein Zeppelin, eine Rakete, einen Satellit, eine Drohne, ein Flugzeug, einen Raumflugkörper und/oder einen Satellit. Die Transportvorrichtung wird vorzugsweise unbemannt verwendet. Alternative oder ergänzend kann die Überwachungsvorrichtung zumindest teilweise ortsfest ausgebildet sein. Diese kann z.B. einen Funkmast umfassen.

Die Förderanlage bzw. das Überwachungssystem kann einen Computer, insbesondere mindestens ein computergestütztes künstliches neuronales Netz, virtuelles Netzwerk und/oder virtuelle Maschine umfassen. Der Regelkreis zur Steuerung der Verlagerung der Sedimente kann Teil des neuronalen Netzes, einer virtuellen Maschine und/oder eines virtuellen Netzes sein. Ferner kann die Überwachungsvorrichtung mit einem sozialen Netzwerk verbindbar sein, um einen Datenaustausch, eine Datenverarbeitung und/oder eine Systemregelung zu ermöglichen.

Die Überwachungsvorrichtung kann mindestens eine Messvorrichtung zur Ermittlung von Messdaten für die limnologische Überwachung umfassen. Die Übertragung der Messdaten und/oder Regelungssignalen kann kabellos erfolgen, beispielsweise per Funk.

Die Messvorrichtung kann mindestens einen Sensor und/oder Aktor umfassen. Der Sensor kann ein optischer Sensor, akustischer Sensor und/oder ein Sensor zur chemischen Analyse sein. Der Sensor kann ferner insbesondere ein kapazitiver und/oder induktiver Sensor sein. Dieser kann vorzugsweise zwei elektrische Leiterbahnen umfassen, die nebeneinander und/oder parallel angeordnet sind, um Änderungen in einem elektrischen Feld zwischen den Leitbahnen zu erfassen.

Die Messvorrichtung kann eine Brückenschaltung mit Dehnmessstreifen umfassen.

Die Messvorrichtung kann ferner ein Piezoelement umfassen. Dieses kann ein keramisches Vielschichtbauteil mit Edelmetallinnenelektroden sein. Ferner kann dieses Piezoaktoren umfassen.

Weiterhin kann die Förderanlage zumindest eine Förderungsleitung umfassen. Zumindest ein Teil der Förderungsleitung kann eine Verengung aufweisen, insbesondere eine konische Verengung, um eine Druckdifferenz herzustellen bzw. auszugleichen. Diese Verengung kann vorzugsweise gemessen am restlichen Durchmesser der Förderungsleitung, kleiner 10 % sein. Ferner kann die Förderanlage einen Schwimmer umfassen, z.B. einen Ponton.

Weitere vorteilhafte Ausgestaltungen gehen aus den nachfolgenden Zeichnungen hervor. Die dort dargestellten Weiterbildungen sind jedoch nicht beschränkend auszulegen. Vielmehr können die dort beschriebenen Merkmale untereinander und mit den oben beschriebenen Merkmalen zur weiteren Ausgestaltung kombiniert werden. Des Weiteren sei darauf verwiesen, dass die in der Figurenbeschreibung angegebenen Bezugszeichen den Schutzbereich der vorliegenden Erfindung nicht beschränken sondern lediglich auf die in den Figuren gezeigten Ausführungsbeispiele verweisen. Gleiche Teile oder Teile gleicher Funktion weisen im Folgenden die gleichen Bezugszeichen auf. Es zeigen:
- Fig. 1: eine Skizze eines Staugewässers in Zusammenhang mit einem Ausfallgeschwindigkeitsdiagramm in schematischer Darstellung;
- Fig. 2: eine schematische Darstellung einer möglichen künstlichen Erosion der Sedimentablagerung unter Wasser;
- Fig. 3: eine schematische Darstellung einer möglichen Verfrachtung von den Sedimentablagerungen in die Nähe eines Abflussorgans unter Wasser; und
- Fig. 4: eine schematische Querschnittsdarstellung eines Ausschnitts einer Förderanlage zur Verfrachtung von den Sedimentablagerungen.

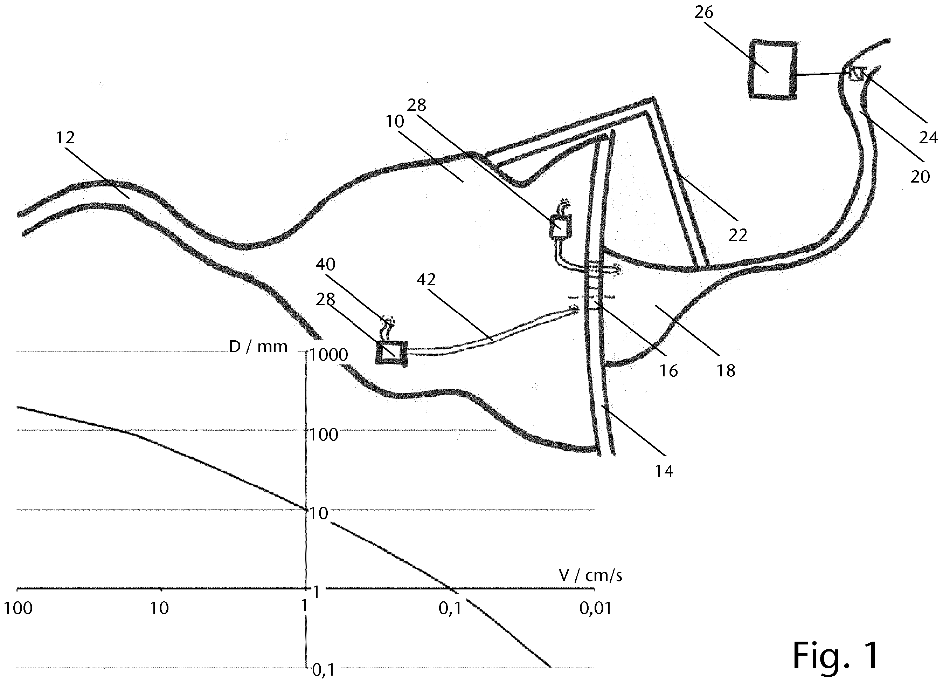

Fig. 1 zeigt ein Staugewässer 10, das von einem Fluss 12 gespeist ist. Der Fluss 12 wird durch eine Stauanlage 14 gestaut. Ein Abflussorgan 16, das überschüssiges Wasser bzw. genütztes Wasser, beispielsweise für eine Kraftwerksanlage, aus dem Staugewässer 10 in ein Unterwasser 18 ablässt, wird insbesondere auch zur Regulierung der Wasserpegelhöhe im Staugewässer 10 verwendet. Vorzugsweise ist die Stauung derart beschaffen, dass das Unterwasser 18 in einen Fluss 20 mündet. Weitere Maßnahmen zur Regulierung der Pegelhöhe des Staugewässers 10 oder zum Hochwasserschutz können beispielsweise durch einen Unterablass 22 erfolgen.

Durch den Stau des Flusses 12 kommt es zu einer Reduktion der Fließgeschwindigkeit im Bereich der Stauanlage 14. Diese Verringerung der Fließgeschwindigkeit wird schematisch durch das Sedimentablagerungsdiagramm unterhalb des Flusses bzw. des Staugewässers 10 verdeutlicht. Das Diagramm zeigt auf der Abszissenachse in logarithmischer Teilung die Fließgeschwindigkeit des Flusses 12 bzw. des Staugewässers 10 in Richtung der Stauanlage 14. Die Ordinatenachse, die ebenfalls logarithmisch geteilt ist, zeigt die Korngröße der Partikel, die sich bei der jeweiligen Geschwindigkeit absetzen. Zu Erkennen ist, dass, je kleiner der Korndurchmesser, desto weiter wird Sediment in Richtung der Stauanlage 14 transportiert. Größeres Sediment, d. h. Sediment mit einem größeren Korndurchmesser, wird weiter weg von der Stauanlage 14 abgelagert als feineres Korn. Insbesondere Tonpartikel mit einer Größe von < 2 µm werden bis zur Staumauer getragen, für größere Sedimentkörner reicht die Fließgeschwindigkeit hierzu nicht aus.

Bisher bekannte Verfahren zur Verlagerung von Sedimenten in Staugewässern sahen lediglich vor, nach bestimmten Mustern bzw. zufallsgeneriert Sedimente vom Grund des Staugewässers aufzunehmen und diese beispielsweise in die Nähe des Abflussorganes 10 zu befördern. Es hat sich jedoch gezeigt, dass dieses Verfahren zwar für Pumpspeicherkraftwerke ausreichend ist, jedoch für fließende Gewässer bzw. gestaute fließende Wasserkörper Nachteile mit sich bringt, da die fehlende oder nicht korrekte Zusammensetzung der Sedimente im Unterwasser zu Erosionsschäden, Hochwasser und anderen Folgen führen kann. Aus diesem Grund wird das Unterwasser 18 bzw. das abfließende Wasser, im folgenden Abfluss 20 genannt aus diesem limnologisch überwacht. Die Überwachung erfolgt mittels zumindest einem Sensor 24, der beispielweise Fließgeschwindigkeit, Trübung, Nährstoffe, Feststoffe, Gase, Wasserstand, Temperatur oder andere Faktoren des Unterwassers 18 misst. Vorzugsweise werden mehrere der genannten Faktoren aufgenommen und bewertet. Hierzu steht insbesondere eine rechnergestützte Überwachungseinheit 26 zur Verfügung. Die Überwachungseinheit 26 steuert in Abhängigkeit von den gemessenen Werten an dem zumindest einen Sensor 24 zumindest einen oder auch mehrere der Nassbagger 28 an. Diese sind vorzugsweise derart angesteuert, dass die Überwachungseinheit 26 einen Bedarf an Sedimentmenge und/oder Korngröße an die Bagger 28 übermittelt, welche sodann entsprechend der vorher ermittelten und/oder bekannten Sedimentablagerung im Staugewässer die Sedimentkorngrößen anfahren, um diese dann aufzunehmen in das Unterwasser 18 wonach denn eine Umlagerung erfolgt. Das Sediment kann, wie hier im Beispiel gezeigt, entweder vor dem Abflussorgan 16 abgelagert werden, so dass dieses durch das Abflussorgan durchströmt oder über die Staumauer hinweg bzw. herum, direkt in das Unterwasser eingebracht werden.

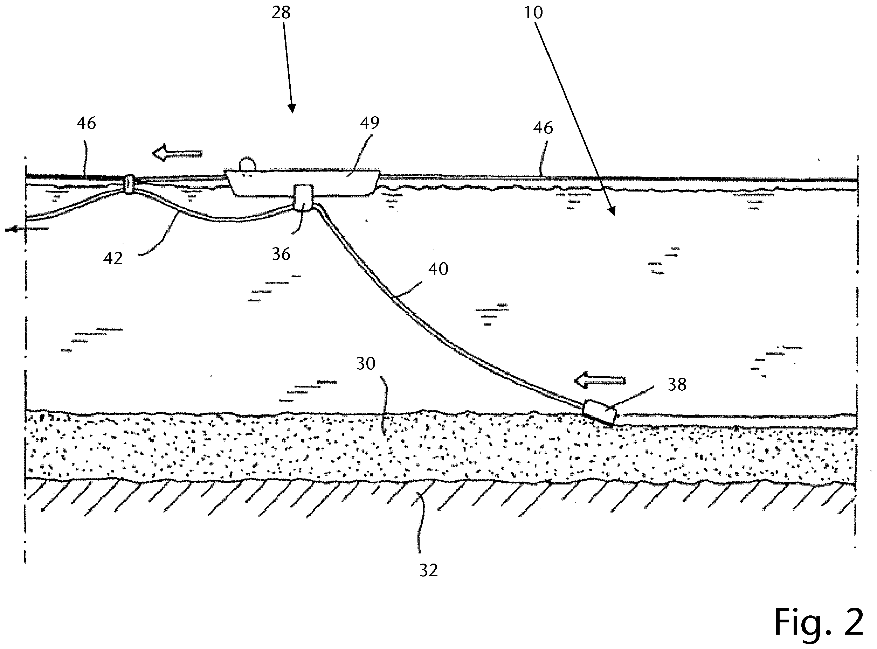

Fig. 2 zeigt beispielhaft die Verfrachtung der Sedimentablagerungen 30 vom Gewässerboden 32 des Staugewässers 10 mittels einer Saugbaggeranordnung 36. Diese besteht aus einer Pumpeinheit 36, einem Spülkopf 38 und einer Förderleitung 40 und 42. Um die Sedimentablagerungen 30 vom Gewässerboden 32 zu lösen, wird ein Spülkopf 38 verwendet, der eine Fräse zur Auflockerung der Sedimente 30 umfasst. Die gelösten Sedimente 30 werden mittels der Pumpeinheit 36 aufgenommen und gefördert. Die Pumpeinheit 36 sorgt gleichzeitig für die Verfrachtung der Sedimente durch die Förderleitung 42 unmittelbar in das Unterwasser oder in einen Bereich des Staugewässers 10, das in der Nähe des Abflussorganes 16 liegt. Vorteilhafterweise wird die Pumpeneinheit 36 auf einem Ponton 44 angeordnet. Der Ponton 49 kann mittels Steuerseilen 46 über einen großen Bereich, vorzugsweise den gesamten Bereich des Staugewässers bewegt werden. In einer weiteren, hier nicht gezeigten Ausgestaltung ist vorgesehen, dass der Saugbagger eine eigene Antriebseinheit besitzt, mit der dieser über das Staugewässer 10 bewegt werden kann.

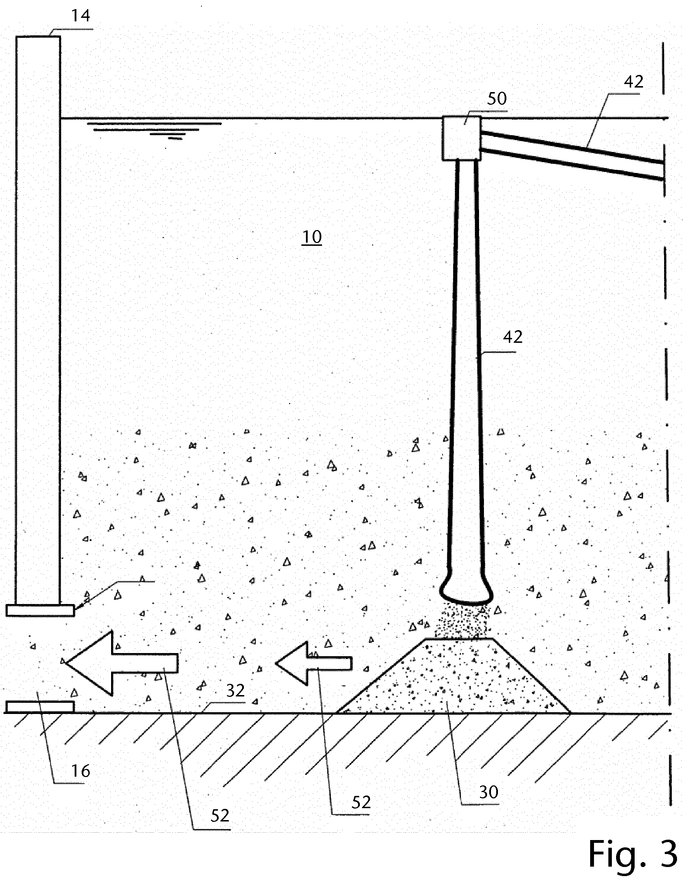

Fig. 3 zeigt beispielhaft die Ablagerung der aufgenommenen Sedimente 30 in der Nähe der Abflussorgane 16. Die Förderleitung 42 wird mittels Schwimmern 50 gehalten und kann in einer Ausgestaltung ebenfalls frei bewegt und insbesondere angesteuert werden. Vorzugsweise kann durch die Verlegung des Schwimmers auf unterschiedliche Sedimentkorngrößen Einfluss genommen werden. Insbesondere können größere Korngrößen näher an das Abflussorgan 16 herangebracht werden, da der Sog bzw. die Fließgeschwindigkeit diese ohne Probleme mitreißen können. Kleinere Sedimentkorngrößen benötigen einen größeren Abstand von dem Abflussorgan 16, da diese schon bei kleineren Fließgeschwindigkeiten durch das Abflussorgan in das Unterwasser fließen. Das abgelagerte Sediment 30 wird durch das Fließen des Wassers in Richtung der Pfeile 52 abgetragen und in das Unterwasser überführt. Zusätzlich oder alternativ kann, wie auch schon in der Fig. 1 gezeigt, das abgetragene Sediment auch direkt in das Unterwasser verfrachtet werden, insbesondere an Stellen, an denen starke Erosionen, beispielsweise durch hohe Fließgeschwindigkeiten herrschen.

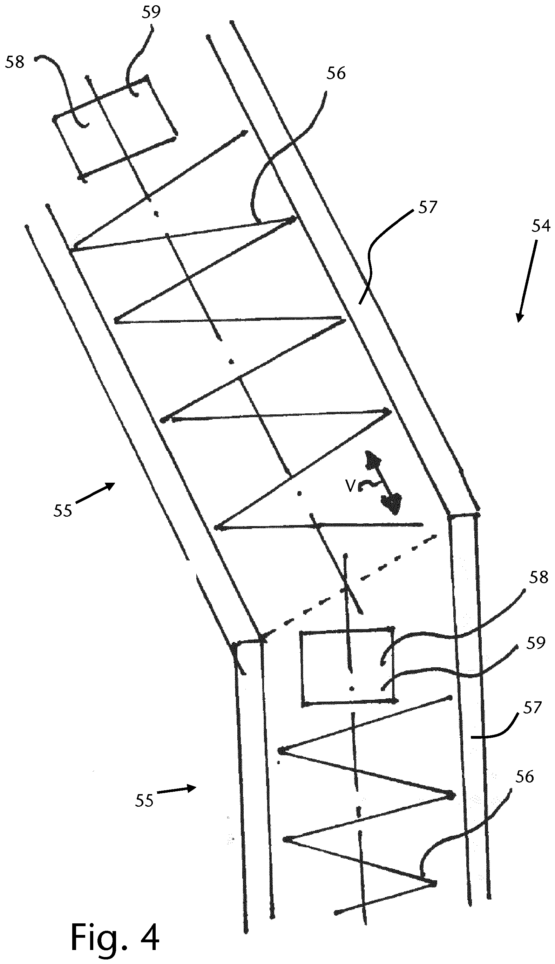

Fig. 4 zeigt beispielhaft eine Förderanlage 54. Diese ist zur verbindenden Anordnung zwischen einem Staugewässer 10 und einem Unterwasser 18 ausgebildet und kann z.B. in einer Stauanlage 14 integriert sein. Die Förderanlage 54 weist zwei hintereinander angeordnete Schneckenförderer 55 auf. Diese umfassen jeweils eine Förderschnecke 56, einen Schneckentrog 57 und eine Motor-Generatoreinheit 58, 59. Die Motor-Generatoreinheit 58, 59 umfasst jeweils einen Motor 58 zum Antrieb der jeweiligen Förderschnecke 56 und einen Generator 59 zur Stromgewinnung. Die Förderanlage 54 weist zwei Förderrichtungen bzw. Betriebsarten auf. Zur Verlagerung von Sedimenten 30 vom Staugewässer 10 in das Unterwasser 18 bewirkt die Schwerkraft bzw. der Wasserdruck eine Drehung der Förderschnecken 56 derart, dass eine Förderung in Richtung des Unterwassers 18 erfolgt. Die Drehung der Förderschnecken 56 kann dabei durch die Generatoren 59 zudem zur Gewinnung von elektrischer Energie genutzt werden.

Ferner können die Motoren 58 die Förderschnecken 56 zusammen in entgegengesetzter Richtung antreiben, um eine Förderrichtung vom Unterwasser 18 in das Staugewässer 10 zu ermöglichen. Die Förderanlage 54 ist derart als Wassertreppe für Lebewesen verwendbar.

## Patentansprüche

1. Verfahren zur künstlichen Erosion von Staugewässern (10), wobei eine Verteilung der mittleren Korngröße von Sedimenten (30) des Staugewässers (10) über die Grundfläche des Staugewässers (10) ermittelt wird, wobei das Unterwasser (18) und/oder das Staugewässer (10) und/oder zumindest ein in das Staugewässer (10) mündendes Gewässer limnologisch überwacht wird, wobei die limnologischen Daten dazu verwendet werden, einen Sedimentbedarf des Unterwassers (18) zu ermitteln, und wobei entsprechend dem Sedimentbedarf des Unterwassers (18) zumindest eine Verlagerung der Sedimente (30) des Staugewässers (10) in das Unterwasser (18) erfolgt.

2. Verfahren nach Anspruch 1, **dadurch gekennzeichnet, dass** eine Abtragung und/oder Aufnahme der Sedimente des Staugewässers (10) in Bereichen des Staugewässers (10) erfolgt, die etwa mittlere Korngrößen aufweisen, die dem Sedimentbedarf des Unterwassers (18) entsprechen.

3. Verfahren nach einem oder mehreren der vorhergehenden Ansprüche, **dadurch gekennzeichnet, dass** die Verlagerung der Sedimente (30) über einen Regelkreis gesteuert wird.

4. Verfahren nach einem oder mehreren der vorhergehenden Ansprüche, **dadurch gekennzeichnet, dass** die Verlagerung der Sedimente (30) gesteuert wird.

5. Verfahren nach einem oder mehreren der vorhergehenden Ansprüche, **dadurch gekennzeichnet, dass** die Abtragung und/oder Aufnahme zumindest mittels eines Nassbaggers (28), mittels eines Spülverfahrens und/oder mittels eines Injektionsverfahrens erfolgt.

6. Verfahren nach einem oder mehreren der vorhergehenden Ansprüche, **dadurch gekennzeichnet, dass** Sedimente (30) des Staugewässers (18) aufgenommen und in zumindest einem Zwischendepot gelagert werden.

7. Verfahren nach Anspruch 6, **dadurch gekennzeichnet, dass** die Sedimente (30) vor einer Einlagerung in das Zwischendepot klassiert werden.

8. Verfahren nach einem oder mehreren der vorhergehenden Ansprüche, **dadurch gekennzeichnet, dass** entsprechend des Sedimentbedarfes des Unterwassers (18) eine Verlagerung der Sedimente (30) des Zwischendepots in das Unterwasser (18) erfolgt.

9. Verfahren nach einem oder mehreren der vorhergehenden Ansprüche, **dadurch gekennzeichnet, dass** die Sedimente (30) vor, in oder hinter einen Ablauf (16) des Staugewässers (10) eingetragen werden.

10. Verfahren nach einem oder mehreren der Ansprüche 1-5 oder 9, **dadurch gekennzeichnet, dass** die Sedimente (30) direkt in das Unterwasser (18) eingetragen werden.

11. Verfahren nach Anspruch 10, **dadurch gekennzeichnet, dass** die Sedimente (30) in erosionsgefährdete oder erosionsbetroffene Bereiche des Unterwassers (18) eingetragen werden.

12. Verfahren nach einem oder mehreren der vorhergehenden Ansprüche, **dadurch gekennzeichnet, dass** die Eintragungsstelle variiert wird.

13. Verfahren nach einem oder mehreren der vorhergehenden Ansprüche, **dadurch gekennzeichnet, dass** die Verlagerung der Sedimente (30) des Staugewässers (10) in das Unterwasser (18) mittels einer Förderanlage (54) erfolgt.

14. Verfahren nach Anspruch 13, **dadurch gekennzeichnet, dass** die Förderanlage (54) mindestens einen Schneckenförderer (55) umfasst.

15. Verfahren nach Anspruch 13 oder 14, **dadurch gekennzeichnet, dass** die Förderanlage (54) zur Gewinnung von elektrischer Energie verwendet wird.

16. Verfahren nach Anspruch 13 bis 15, **dadurch gekennzeichnet, dass** die Förderanlage (54) als Wassertreppe verwendet wird.

## Claims

1. Method for artificially eroding dammed bodies of water (10), wherein a distribution of the average grain size of sediments (30) of the dammed body of water (10) over the ground area of the dammed body of water (10) is determined, wherein the downstream water (18) and/or the dammed body of water (10) and/or at least one body of water flowing into the dammed body of water (10) is limnologically monitored, wherein the limnological data are used to determine a sediment requirement of the downstream water (18), and wherein at least one displacement of sediments (30) of the dammed body of water (10) into the downstream water (18) takes place according to the sediment requirement of the downstream water (18).

2. Method according to claim 1, **characterized in that** a removal and/or accumulation of the sediments of the dammed body of water (10) takes place in regions of the dammed body of water (10) that have approximately an average grain size corresponding to the sediment requirements of the downstream water (18).

3. Method according to one or more of the preceding claims, **characterized in that** the displacement of the sediments (30) is controlled via a control circuit.

4. Method according to one or more of the preceding claims, **characterized in that** the displacement of the sediments (30) is controlled.

5. Method according to one or more of the preceding claims, **characterized in that** the removal and/or accumulation takes place by means of at least one dredger (28), by means of a flushing procedure and/or by means of an injection procedure.

6. Method according to one or more of the preceding claims, **characterized in that** sediments (30) of the dammed body of water (18) are accumulated and stored in at least one interim depot.

7. Method according to claim 8, **characterized in that** the sediments (30) are classified before being stored in the interim depot.

8. Method according to one or more of the preceding claims, **characterized in that** a displacement of the sediments (30) of the interim depot into the downstream water (18) takes place according to the sediment demand of the downstream water (18).

9. Method according to one or more of the preceding claims, **characterized in that** the sediments (30) are introduced in front of, into or behind a drain (16) of the dammed body of water (10).

10. Method according to one or more of claims 1 - 5 or 9, **characterized in that** the sediments (30) are introduced directly into the downstream water (18).

11. Method according to claim 10, **characterized in that** the sediments (30) are introduced into regions of the downstream water (18) endangered by erosion, or damaged by erosion.

12. Method according to one or more of the preceding claims, **characterized in that** the introduction location is varied.

13. Method according to one or more of the preceding claims, **characterized in that** the displacement of the sediments (30) of the dammed body of water (10) into the downstream water (18) takes place by means of a conveyor system (54).

14. Method according to claim 1 3, **characterized in that** the conveyor system (54) comprises at least one spiral conveyor (55).

15. Method according to claim 13 or 14, **characterized in that** the conveyor system (54) is used to generate electrical energy.

16. Method according to claim 13 to 15, **characterized in that** the conveyor system (54) is used as a water ladder.

## Revendications

1. Procédé d'érosion artificielle de bassins de retenue (10), dans lequel une répartition de la granulométrie moyenne de sédiments (30) du bassin de retenue (10) sur la surface du fond du bassin de retenue (10) est déterminée, dans lequel le bief aval (18) et/ou le bassin de retenue (10) et/ou au moins un cours d'eau débouchant dans le bassin de retenue (10) sont surveillés du point de vue limnologique, dans lequel les données limnologiques sont utilisées pour déterminer un besoin en sédiments du bief aval (18) et dans lequel, selon le besoin en sédiments du bief aval (18), au moins un déplacement des sédiments (30) du bassin de retenue (10) dans le bief aval (18) a lieu.

2. Procédé selon la revendication 1, **caractérisé en ce qu'**une extraction et/ou un prélèvement des sédiments du bassin de retenue (10) ont lieu dans des zones du bassin de retenue (10) qui présentent approximativement des granulométries moyennes qui correspondent aux besoins en sédiments du bief aval (18).

3. Procédé selon une ou plusieurs des revendications précédentes, **caractérisé en ce que** le déplacement des sédiments (30) est contrôlé par un circuit de régulation.

4. Procédé selon une ou plusieurs des revendications précédentes, caractérisé en ceque le déplacement des sédiments (30) est contrôlé.

5. Procédé selon une ou plusieurs des revendications précédentes, **caractérisé en ce que** l'extraction et/ou le prélèvement ont lieu au moins au moyen d'une drague (28), au moyen d'un procédé de rinçage et/ou au moyen d'un procédé d'injection.

6. Procédé selon une ou plusieurs des revendications précédentes, **caractérisé en ce que** les sédiments (30) du bassin de retenue (18) sont prélevés et stockés dans au moins un dépôt intermédiaire.

7. Procédé selon la revendication 6, **caractérisé en ce que** les sédiments (30) sont classés avant un stockage dans le dépôt intermédiaire.

8. Procédé selon une ou plusieurs des revendications précédentes, **caractérisé en ce que**, selon le besoin en sédiments du bief aval (18), un déplacement des sédiments (30) du dépôt intermédiaire dans le bief aval (18) a lieu.

9. Procédé selon une ou plusieurs des revendications précédentes, **caractérisé en ce que** les sédiments (30) sont déposés devant, dans ou derrière une évacuation (16) du bassin de retenue (10).

10. Procédé selon une ou plusieurs des revendications 1 à 5 ou 9, **caractérisé en ce que** les sédiments (30) sont déposés directement dans le bief aval (18).

11. Procédé selon la revendication 10, **caractérisé en ce que** les sédiments (30) sont déposés dans des zones menacées d'érosion ou touchées par l'érosion du bief aval (18).

12. Procédé selon une ou plusieurs des revendications précédentes, **caractérisé en ce que** le lieu de dépôt varie.

13. Procédé selon une ou plusieurs des revendications précédentes, **caractérisé en ce que** le déplacement des sédiments (30) du bassin de retenue (10) dans le bief aval (18) a lieu au moyen d'un système de transport (54).

14. Procédé selon la revendication 13, **caractérisé en ce que** le système de transport (54) comprend au moins un transporteur à vis (55).

15. Procédé selon la revendication 13 ou 14, **caractérisé en ce que** le système de transport (54) est utilisé pour générer de l'énergie électrique.

16. Procédé selon la revendication 13 à 15, **caractérisé en ce que** le système de transport (54) est utilisé comme escalier d'eau.
